## Europäisches Patentamt

## European Patent Office

## Office européen des brevets

(11) Veröffentlichungsnummer: **0 252 898**
**A2**

# EUROPÄISCHE PATENTANMELDUNG

(21) Anmeldenummer: 87890107.3

(22) Anmeldetag: 20.05.87

(51) Int. Cl.⁴: **H 02 M 7/529**
H 02 P 7/63

(30) Priorität: 27.05.86 AT 1418/86

(43) Veröffentlichungstag der Anmeldung:
13.01.88 Patentblatt 88/02

(84) Benannte Vertragsstaaten:
BE CH DE ES FR GB IT LI NL SE

(71) Anmelder: AUSTRIA Antriebstechnik G. Bauknecht
Aktiengesellschaft
G.-Bauknecht-Strasse 1
A-8740 Zeltweg-Spielberg (Steiermark) (AT)

(72) Erfinder: Beckord, Ulrich, Dipl.-Ing.
Westende 5
A-8720 Pausendorf (Steiermark) (AT)

Mazuhell, Robert
Neugasse 5
A-8734 Grosslobming (Steiermark) (AT)

(74) Vertreter: Beer, Manfred, Dipl.-Ing. et al
Patentanwälte Dipl.-Ing. Otto Beer, Dipl.-Ing. Manfred
Beer Lindengasse 8, Postfach 462
A-1071 Wien (AT)

(54) Drehstromantrieb mit Frequenzumrichtersteuerung.

(57) Zur Erreichung einer hohen Drehzahlkonstanz wird bei einem Drehstromantrieb mit Frequenzumrichtersteuerung, deren Frequenzumrichter einen Pulsbreitenmodulator und einen Gleichspannungszwischenkreis mit einer über einen ungesteuerten Gleichrichter aus dem Netz erzeugten Zwischenkreisspannung aufweist, eine Überwachungseinheit zur laufenden Kontrolle der Zwischenkreisspannung vorgesehen. Bei Schwankungen dieser Zwischenkreisspannung wird der Pulsbreitenmodulator zu einer gegengleichen Änderung der Breite der erzeugten Pulse veranlaßt.

EP 0 252 898 A2

Bundesdruckerei Berlin

**Beschreibung**

Drehstromantrieb mit Frequenzumrichtersteuerung

Die Erfindung betrifft einen Drehstromantrieb mit Frequenzumrichtersteuerung, wobei der Frequenzumrichter einen Pulsbreitenmodulator und einen Gleichspannungszwischenkreis asufweist, dessen Spannung mit einem ungesteuerten Gleichrichter aus dem Netz erzeugt wird.

Bei Frequenzumrichtern, deren Zwischenkreisspannung mit ungesteuerten Gleichrichtern aus dem Netz erzeugt wird, wie sie aus Kostengründen insbesondere bei kleineren Drehstromantrieben oft verwendet werden, ist die Zwischenkreisspannung netzspannungsabhängig, was eine direkte Abhängigkeit der Drehzahl des angesteuerten Elektromotors von Netzspannungsschwankungen ergibt.

Da dies für viele Anwendungsfälle nachteilig ist, stellt sich die vorliegende Erfindung die Aufgabe, derartige Drehzahlschwankungen mit möglichst einfachen Mitteln zu verhindern, um auch bei ansonsten ungeregelten Drehstromantrieben der genannten Art eine hohe Drehzahlkonstanz zu erreichen.

Die genannten Aufgabe wird gemäß der Erfindung dadurch gelöst, daß eine Überwachungseinheit zur laufenden Kontrolle der Zwischenkreisspannung vorgesehen wird, welche mit einem Steuereingang des Pulsbreitenmodulators des Frequenzumrichters verbunden ist und bei einer Änderung der Zwischenkreisspannung zur umgekehrt proportionalen Änderung der Pulsbreite dient. Die Erfindung geht also davon aus bzw. macht sich die Tatsache zunutze, daß in modernen Frequenzumrichtern der eingangs angesprochenen Art die Speisespannung für den Drehstrommotor durch Pulsbreitenmodulation erzeugt wird, was die sehr einfache Möglichkeit eröffnet, Schwankungen in der Zwischenkreisspannung, die wie erwähnt von Netzschwankungen herrühren, zu einer gegenläufigen Änderung der jeweiligen Pulsbreite zu verwenden, womit die Auswirkungen auf die Drehzahl des angesteuerten Motors mit sehr einfachen Mitteln unterbunden werden können.

Gemäß einer vorteilhaften Ausgestaltung der Erfindung ist vorgesehen, daß die Überwachungseinheit zur laufenden Kontrolle der Zwischenkreisspannung von einem Logikbaustein, wie z. B. einen Mirkoprozessor gebildet ist, der gleichzeitig auch als Pulsbreitenmodulator dient. Damit ist der zusätzliche Aufwand für die Erreichung einer hohen Drehzahlkonstanz äußerst gering und eine einfache, kostengünstige und funktionssichere Ausbildung ermöglicht.

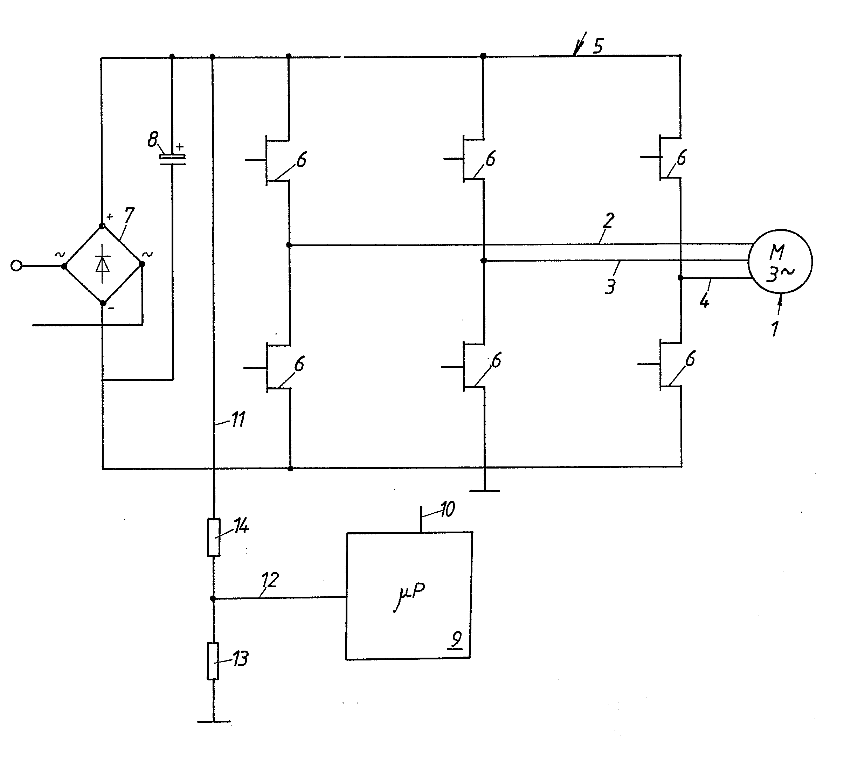

Die Erfindung wird im folgenden anhand des in der Zeichnung schematisch in einem Schaltbild dargestellten Ausführungsbeispieles näher erläutert.

Ein Drehstrommotor I ist über Versorgungsleitungen 2, 3, 4 mit den Mittelpunkten einer Drehstrombrücke 5 verbunden, die in jedem ihrer Brückenzweige jeweils zwei Leistungshalbleiter 6 aufweist. Der Drehstrombrücke 5 ist ein Gleichspannungszwischenkreis vorgeschaltet, dessen Zwischenkreisspannung über einen ungesteuerten Gleichrichter 7 direkt aus dem Wechselstromnetz erzeugt wird.

Parallel zu den Gleichspannungsausgängen des Gleichrichters 7 ist ein Siebkondensator 8 zur Verringerung der Welligkeit eingeschaltet.

Die Leistungshalbleiter 6 der Drehstrombrücke 5 sind von einem Mikroprozessor 9 aus auf hier nicht weiter interessierende Art gesteuert und ermöglichen damit die Erzeugung des für den Betrieb des Drehstrommotors I erforderlichen Drehfeldes aus der Zwischenkreisspannung. Wesentlich ist nur die Tatsache, daß dabei, sowie in vielen modernen Frequenzumrichtern üblich, die Pulsbreitenmodulation angewendet wird, bei der die Speisespannung für den Drehstrommotor I in ihrer Pulsbreite den Anforderungen gemäß variiert wird. Der entsprechende Steueraus gang des Mikroprozessors 9 ist mit I0 angedeutet.

Zufolge des ungesteuerten Gleichrichters 7 wirken sich Schwankungen in der Netzspannung, die ohne weiteres einige Prozent erreichen können, praktisch unmittelbar in entsprechenden Schwankungen der Zwischenkreisspannung aus, die ihrerseits wiederum über die Drehstrombrücke 5 zu einer unmittelbaren Beeinflussung der dem Drehstrommotor zugeführten Spannung und damit zu einer unerwünschten Schwankung in seiner Drehzahl führen würden. Um dies zu verhindern, wird die Zwischenkreisspannung über Leitungen II, I2 und den aus den beiden Widerständen I3, I4 gebildeten Spannungsteiler dem Mikroprozessor 9 zugeführt, der damit gleichzeitig als Überwachungseinheit zur laufenden Kontrolle der Zwischenkreisspannung dient. Der im Mikroprozessor 9 realisierte Pulsbreitenmodulator wird an einem Steuereingang mit einem der Zwischenkreisspannung bzw. der Schwankung der Zwischenkreisspannung proportionalen Signal versorgt, womit auf sehr einfache Weise ein Absinken der Zwischenkreisspannung zufolge einer absinkenden Netzspannung gegengleich durch eine entsprechende Erhöhung der jeweiligen Pulsbreite ausgeglichen werden kann. Umgekehrt kann ein Ansteigen der Zwischenkreisspannung zufolge eines Ansteigens der Netzspannung durch entsprechende Reduktion der Pulsbreite ausgeglichen werden, so daß die Versorgungsspannung für den Drehstrommotor I konstant gehalten und eine hohe Drehzahlkonstanz erzielt werden kann.

Abgesehen von der dargestellten Realisierung der Überwachungseinheit für die Zwischenkreisspannung sowie des Pulsbreitenmodulators in einem Mikroprozessor wäre natürlich auch eine rein hardwaremäßige Ausgestaltung dieser beiden Einrichtungen denkbar und würde gleichermaßen den Vorteil einer von Spannungsschwankungen des Netzes unabhängigen konstanten Versorgung des Drehstrommotors I ergeben.

**Patentansprüche**

1. Drehstromantrieb mit Frequenzumrichtersteuerung, wobei der Frequenzumrichter einen Pulsbreitenmodulator und eine Gleichspannungszwischenkreis aufweist, dessen Spannung mit einem ungesteuerten Gleichrichter aus dem Netz erzeugt wird, dadurch gekennzeichnet, daß eine Überwachungseinheit zur laufenden Kontrolle der Zwischenkreisspannung vorgesehen ist, welche mit einem Steuereingang des Pulsbreitenmodulators des Frequenzumrichters verbunden ist und bei einer Änderung der Zwischenkreisspannung zur umgekehrt proportionalen Änderung der Pulsbreite dient.

2. Drehstromantrieb nach Anspruch I, dadurch gekennzeichnet, daß die Überwachungseinheit von einem Logikbaustein, wie z. B. einen Mikroprozessor (9) gebildet ist, der auch als Pulsbreitenmodulator dient.

0252898